(19) Europäisches Patentamt
European Patent Office
Office européen des brevets

(11) EP 3 957 667 A1

(12) EUROPÄISCHE PATENTANMELDUNG

(43) Veröffentlichungstag:
23.02.2022 Patentblatt 2022/08

(21) Anmeldenummer: 20191871.1

(22) Anmeldetag: 20.08.2020

(51) Internationale Patentklassifikation (IPC):
C08G 18/42 (2006.01)        C08G 18/48 (2006.01)
C08G 18/50 (2006.01)        C08G 18/40 (2006.01)
C08G 18/76 (2006.01)        C08G 18/36 (2006.01)
B32B 15/04 (2006.01)

(52) Gemeinsame Patentklassifikation (CPC):
C08G 18/4216; B32B 5/022; B32B 5/245;
B32B 15/046; B32B 15/12; B32B 15/18;
B32B 15/20; B32B 21/02; B32B 21/047;
B32B 27/065; B32B 29/007; C08G 18/36;
C08G 18/4018; C08G 18/4202; C08G 18/4211;
(Forts.)

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Covestro Deutschland AG
51373 Leverkusen (DE)

(72) Erfinder: Die Erfindernennung liegt noch nicht vor

(74) Vertreter: Levpat
c/o Covestro AG
Gebäude 4825
51365 Leverkusen (DE)

(54) POLYOLFORMULIERUNGEN UND EIN VERFAHREN ZUR HERSTELLUNG VON PUR-/PIR-SCHAUMSTOFFEN AUF BASIS DIESER POLYOLFORMULIERUNGEN

(57) Die vorliegende Erfindung betrifft Polyolformulierungen aus einer aromatischen Polyesterpolyolkomponente und einer spezifischen Polyetherpolyolkomponente, ein Verfahren zur Herstellung von Polyurethan-Hartschaumstoffen bzw. Polyurethan-/Polyisocyanurat-Hartschaumstoffen unter Verwendung dieser Polyolformulierung und die daraus hergestellten PUR-/PIR-Hartschaumstoffe. Metallverbundelement enthaltend diese Hartschaumstoffe weisen eine besonders niedrige Rissanfälligkeit in der Kälte auf.

EP 3 957 667 A1

(52) Gemeinsame Patentklassifikation (CPC): (Forts.)
**C08G 18/4225; C08G 18/485; C08G 18/5021;**
**C08G 18/7664; C08G 18/7671;** B32B 2250/02;
B32B 2250/03; B32B 2250/40; B32B 2262/10;
B32B 2266/0278; B32B 2307/304; B32B 2419/00;
C08G 2110/0025; C08G 2330/00

**Beschreibung**

Die vorliegende Erfindung betrifft Polyolformulierungen aus einer Polyesterpolyolkomponente und einer spezifischen Polyetherpolyolkomponente. Die vorliegende Erfindung betrifft ebenfalls ein Verfahren zur Herstellung von Polyurethan-Hartschaumstoffen bzw. Polyurethan-/Polyisocyanurat-Hartschaumstoffen (im Folgenden einzeln oder gemeinsam auch als "PUR-/PIR-Hartschaumstoffe" bezeichnet) unter Verwendung dieser Polyolformulierung und die hiermit hergestellten PUR-/PIR-Hartschaumstoffe.

Wie andere Polymere auch, werden PUR-/PIR-Hartschaumstoffe in der Kälte spröde und neigen dazu, zu reißen und bereits bei geringer Belastung zu brechen. Bei der mechanischen Belastung mit einem Messer in der Kälte beispielsweise zeigen Metallverbundelemente, welche einen PUR-/PIR-Hartschaumstoffkern enthalten, Schadensbilder in Form von Längsrissen. Dies tritt insbesondere bei Polyolformulierungen enthaltend überwiegend aromatische Polyole auf und ist besonders ausgeprägt in den ersten Wochen nach der Herstellung.

Aufgabe der hier geschilderten Erfindung ist es, die Rissanfälligkeit in der Kälte von solchen Metallverbundelementen nach der Herstellung zu reduzieren, insbesondere im Zeitraum der ersten vier Wochen nach der Herstellung.

Diese Aufgabe konnte überraschenderweise durch die Verwendung einer isocyanat-reaktiven Komponente **A** gelöst werden, welche, bezogen auf das Gesamtgewicht von **A**, folgende Komponenten enthält:

**A1**) eine Polyolformulierung, umfassend

50-80 Gew.-% (besonders bevorzugt 60-79 Gew.-%) einer Polyolkomponente **a1**) bestehend aus einem oder mehreren Polyolen ausgewählt aus Polyesterpolyolen, Polycarbonatpolyolen oder Polyetheresterpolyolen mit einer Hydroxylzahl von 100 bis 300 mg KOH/g und einer mittleren Funktionalität von 1,5 bis 2,5, wobei die Polyolkomponente a1) mindestens ein aromatisches oder aromatisch/aliphatisches Polyesterpolyol oder Polyetheresterpolyol umfasst,

0 - 5 Gew.-% (insbesondere 0 - 3 Gew.-%) einer Polyolkomponente **a2**) bestehend aus einem oder mehreren Polyolen ausgewählt aus Polyesterpolyolen und Polyetheresterpolyolen mit einer Hydroxylzahl von 320 bis 450 mg KOH/g und einer mittleren Funktionalität von 3 bis 4,5, wobei die Polyolkomponente a2) mindestens ein aromatisches oder ein aromatisch/aliphatisches Polyesterpolyol oder Polyetheresterpolyol umfasst,

7,0 - 15 Gew.-% (insbesondere 8,0 - 12 Gew.-%) einer Polyolkomponente **a3**) bestehend aus einem oder mehreren Polyolen ausgewählt aus Polyetherpolyolen mit einer OH-Zahl von 10 bis 80 KOH/g und einer mittleren Funktionalität von $\geq 2,0$ bis $\leq 3,0$, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO,

0,0 - 7,5 Gew.-% (insbesondere bevorzugt 0 - 5 Gew.-%) einer Polyolkomponente **a4**) bestehend aus einem oder mehreren Polyolen ausgewählt aus Polyetherpolyolen mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid,

0,0 - 3,0 Gew.-% (insbesondere bevorzugt 0,3 - 1,0 Gew.-%) einer Polyolkomponente **a5**) bestehend aus einem oder mehreren Polyolen ausgewählt aus Polyesterpolyolen mit einer OH-Zahl im Bereich von 600 - 900 mg KOH/g, insbesondere von 750 - 850 mg KOH/g;

**A2**) 0 - 5 Gew.-% (insbesondere bevorzugt 0 - 3 Gew.-%) niedermolekulare isocyanat - reaktive Verbindungen, sowie
**A3**) gegebenenfalls Katalysatoren,
**A4**) gegebenenfalls Hilfs- und Zusatzstoffe
**A5**) 0 - 1,5 Gew.-% Wasser und
**A6**) 0 - 7,5 Gew.-% (insbesondere bevorzugt 0 - 5 Gew.-%) Rizinusöl,

enthalten.

Alle angegebenen Gewichtsprozente beziehen sich auf das Gesamtgewicht von A.

Polyolformulierungen allgemein enthaltend langkettige Polyetherpolyole, zu denen auch die Verbindungen a3) gehören, sind bekannt. So beschreibt z.B. die WO 2018/206624 A den Einsatz von maximal 20 Gew.-%, bezogen auf die gesamte Reaktionsmischung, an langkettigen Polyethern in Kombination mit kurzkettigen Polyetherpolyolen für die Verbesserung von Haftungseigenschaften. Bezogen auf die Polyolformulierung werden in den Beispielen ca. 6 Gew.-

% eines Polyetherpolyols (Polykondensat einer unspezifizierten PO/EO - Mischung, Glyzerin als Starter) mit der OH-Zahl 56 und einem zahlenmittleren Molgewicht von 3000 g/mol eingesetzt.

Überraschenderweise wurde gefunden, dass die Rissanfälligkeit in der Kälte, z.B. bei -10° und - 20°C von Metallverbundelementen mit einem Kern aus PUR-/PIR-Schaumstoffen mit der erfindungsgemäßen Polyolformulierung deutlich reduziert werden. Dahingegen zeigen Metallverbundelemente, die mit einem PIR-System hergestellt worden sind, die keine Komponente a3) bzw. eine zu geringe Menge an Komponente a3) enthalten, Schadensbilder in Form von Längsrissen bei der mechanischen Belastung mit einem Messer, wenn diese in der Kälte beansprucht werden. Dies ist besonders ausgeprägt in den ersten Wochen nach der Herstellung. Gleichzeitig weisen die PUR-/PIR-Schaumstoffe gute mechanische Eigenschaften, wie Zugfestigkeit, Bruchdehnung, Zähigkeit und Offenzelligkeit der PUR-/PIR-Schaumstoffe auf.

Die Polyesterpolyole, die für die Komponente a1) verwendet werden, sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Unter "aromatischen Polyestern" versteht man dabei solche Polyester, zu deren Herstellung nur Polycarbonsäuren eingesetzt werden, welche einen aromatischen Anteil aufweisen. Unter "aromatisch/aliphatischen Polyestern" werden solche Polyester verstanden, zu deren Herstellung aromatische und aliphatische Polycarbonsäuren eingesetzt werden. Dies gilt analog auch für die unten beschriebenen Polyetheresterpolyole. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,3-Butandiol, 1,6-Hexandiol und Isomere, Neopentylglykol oder Hydroxypivalinsäure-neopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als aromatische Polycarbonsäuren können beispielsweise Phthalsäure, Isophthalsäure, Terephthalsäure, Trimellithsäure, Trimesinsäure (1,3,5-Benzoltricarbonsäure), Pyromellithsäure und Endomethylen-tetrahydrophthalsäure, Tetrahydrophthalsäure, Hexahydrophthalsäure und/oder Tetrachlorphthalsäure eingesetzt werden, insbesondere Phthalsäure und ihre Isomere und Derivate. Beispiele für aliphatische Polycarbonsäure eignen sich beispielsweise Cyclohexandicarbonsäure, Adipinsäure, Azelainsäure, Sebacinsäure, Glutarsäure, Maleinsäure, Fumarsäure, Itaconsäure, Malonsäure, Korksäure, Bernsteinsäure, 2-Methylbernsteinsäure, 3,3- Diethylglutarsäure, 2,2-Dimethylbernsteinsäure, Dodekandisäure, Dimerfettsäure, Trimerfettsäure und/oder Zitronensäure.

Den eingesetzten Polycarbonsäuren können auch Monocarbonsäuren und deren Derivate zugesetzt werden. Es kommen insbesondere auch biobasierte Ausgangsstoffe und/oder deren Derivate in Frage, wie z. B. Rizinusöl, Polyhydroxyfettsäuren, Ricinolsäure, Stearinsäure, Sojaölfettsäure, Hydroxymodifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxymodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidon-säure, Timnodonsäure, Clupanodonsäure und Cervonsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Als Polyole in der Komponente a1) können auch Polycarbonatpolyole eingesetzt werden. Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen oder aus Kohlendioxid erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art. Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit > 4 bis < 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit > 1 bis < 4 Kohlenstoffatomen eingesetzt werden.

Die Polyole der Komponente a1) weisen mittlere Funktionalitäten von ≥1,2 bis ≤ 2,9 insbesondere ≥1,5 bis ≤ 2,5, und eine Hydroxylzahl zwischen 100 bis 300 mg KOH/g auf, besonders bevorzugt 150 bis 270 mg KOH/g und insbesondere bevorzugt von 160 - 260 mg KOH/g. Vorzugsweise besitzen die Polyole mehr als 70 mol%, bevorzugt mehr als 80 mol%, insbesondere mehr als 90 mol%, primäre OH-Gruppen.

Die Komponente a1) umfasst mindestens ein aromatisches oder aromatisch/aliphatisches Polyesterpolyol oder Polyetheresterpolyol. Dies bedeutet, dass die Komponente a1) einen aromatischen Anteil aufweist. In einer bevorzugten Ausführungsform sind mehr als 50 Gew.-% der Komponente a1) aromatische oder aromatisch/aliphatische Polyesterpolyole und/oder Polyetheresterpolyole, insbesondere mehr als 80 Gew.-%, und ganz besonders bevorzugt besteht die Komponente a1) aus aromatischen und/oder aromatisch/aliphatische Polyesterpolyolen und/oder Polyetheresterpolyolen.

Die Polyole der Komponente a2) werden nach den gleichen, bekannten Verfahren, wie die Polyesterpolyole bzw. Polyetheresterpolyole der Polyolkomponente a1) hergestellt. Die Polyole der Komponente a2) weisen mittlere Funktionalitäten von ≥3,0 bis ≤6,0, insbesondere ≥3,0 bis ≤4,5, und eine Hydroxylzahl von 310 bis 500 mg KOH/g auf, besonders bevorzugt 320 bis 450 mg KOH/g. Vorzugsweise besitzen die Polyesterpolyole a2) mehr als 70 mol%, bevorzugt mehr als 80 mol%, insbesondere mehr als 90 mol%, primäre OH-Gruppen.

Die Komponente a2) umfasst mindestens ein aromatisches oder aromatisch/aliphatisches Polyesterpolyol oder Polyetheresterpolyol. Dies bedeutet, dass die Komponente a2) einen aromatischen Anteil aufweist. In einer bevorzugten Ausführungsform sind mehr als 50 Gew.-% der Komponente a2) aromatische oder aromatisch/aliphatische Polyesterpolyole und/oder Polyetheresterpolyole, insbesondere mehr als 80 Gew.-%, und ganz besonders bevorzugt besteht die Komponente a2) aus aromatischen und/oder aromatisch/aliphatische Polyesterpolyolen und/oder Polyetheresterpolyolen.

Als weitere Komponente zur Herstellung der Polyolformulierung werden Polyetherpolyole a3) eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise ≥ 18 g/mol bis 400 ≤ g/mol, bevorzugt von ≥ 62 g/mol bis 200 ≤ g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit 3 zerewitinoff-aktiven Wasserstoffen, zum Beispiel 1,1,1-Trimethylolpropan, Triethanolamin, Glycerin, sowie auf Triolen gestartete Polyethylenoxidpolyole mit mittleren Molmassen Mn von vorzugsweise ≥ 62 g/mol bis ≤ 400 g/mol, insbesondere von ≥ 92 g/mol bis 200 ≤ g/mol.

Als Alkylenoxid-komponente wird eine Mischung aus Ethylenoxid und Propylenoxid eingesetzt mit einem Ethylenoxid-Gehalt von 15 bis 70 Gew.-%, bevorzugt 15-50 Gew.-%, insbesondere bevorzugt von 20 bis 40 Gew.%, bezogen auf die Gesamtmenge an Alkylenoxid.

Die Polyetherpolyole a3) werden nach bekannten Verfahren hergestellt, wie beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls oder Mischungen von Startermolekülen.

Das Polyetherpolyol a4) weist vorzugsweise eine Hydroxylzahl von ≥ 350 mg KOH/g bis ≤ 500 mg KOH/g und besonders bevorzugt von ≥ 390 mg KOH/g bis ≤ 440 mg KOH/g auf. Im Rahmen der vorliegenden Erfindung lassen sich Hydroxylzahlen generell anhand DIN 53240 bestimmen. Das Polyetherpolyol a4 wird durch Umsetzung wenigstens eines aromatischen Amins mit mindestens einem Alkylenoxid hergestellt. Bevorzugte aromatische Amine werden ausgewählt aus der Gruppe bestehend aus Toluylendiamin, Diaminodiphenylmethan und Polymethylenpolyphenylen-polyamin.

Als Alkylenoxid kann bevorzugt Ethylenoxid, Propylenoxid oder ein Gemisch davon verwendet werden. Ethylenoxid ist besonders bevorzugt. Die durchschnittliche Funktionalität dieses Polyetherpolyols a4) ist bevorzugt 4.

Das gewichtsmittlere Molekulargewicht der Polyetherpolyole a4) liegt vorzugsweise im Bereich zwischen 400 g/mol und 700 g/mol, besonders bevorzugt im Bereich zwischen 500 g/mol und 600 g/mol.

Die Polyetherpolyole a4) werden nach bekannten Verfahren hergestellt, wie beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines aromatischen Amins als Startermolekül mit einem oder mehreren Alkylenoxiden mit 2 bis 4 Kohlenstoffatomen im Alkylenrest.

Das Polyesterpolyol a5) kann beispielsweise ein Polykondensat aus Polyolen und aromatischen Di- sowie gegebenenfalls Tri- und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Polyole umfassen Ethylenglykol, Propylenglykol-(1,2) und -(1,3), Butylenglykol-(1,4) und -(2,3), Hexandiol-(1,6), Octandiol-(1,8), Neopentylglykol, 1,4-Bishydroxymethylcyclohexan, 2-Methyl-1,3-propandiol, Glycerin, Trimethylolethan, Hexantriol-(1,2,6), Butantriol-(1,2,4), Chinol, Methylglucosid, Triethylenglykol, Tetraethylenglykol und höhere Polyethylenglykole, Dipropylenglykol und höhere Polypropylenglykole, Diethylenglykol, Glycerin, Pentaerythrit, Trimethylolpropan, Sorbit, Mannit, Dibutylenglykol und höhere Polybutylenglykole. Besonders geeignete Polyole sind Alkylenglykole und Oxyalkylenglykole, zum Beispiel Ethylenglykol, Diethylenglykol, Dipropylenglykol, Triethylenglykol, Tripropylenglykol, Tetraethylenglykol, Tetrapropylenglykol, Trimethylenglykol, Tetramethylenglykol und 1,4-Cyclohexandimethanol (1,4-Bis-hydroxymethylcyclohexan).

Als aromatische Dicarbonsäuren können beispielsweise Phthalsäure, Isophthalsäure, Terephthalsäure und/oder Tetrachlorphthalsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mitverwendet werden.

Hydroxycarbonsäuren, die als Reaktionsteilnehmer bei der Herstellung eines aromatischen Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Bevorzugt wird das Polyesterpolyol a5) aus Phthalsäureanhydrid und Diethylenglykol erhalten.

Das Polyesterpolyol a5) weist eine Hydroxylzahl von ≥ 600 mg KOH/g bis ≤ 900 mg KOH/g und besonders bevorzugt ≥ 750 mg KOH/g bis ≤ 850 mg KOH/g auf. Im Rahmen der vorliegenden Erfindung lassen sich Hydroxylzahlen generell anhand DIN 53240 bestimmen. Die durchschnittliche Funktionalität dieses Polyesterpolyols a5) ist vorteilhafterweise ≥ 1,8 bis ≤ 2,2. Das gewichtsmittlere Molekulargewicht der Polyesterpolyole a5) liegt vorzugsweise im Bereich zwischen 130 g/mol und 400g/mol, besonders bevorzugt im Bereich zwischen 130 g/mol und 300 g/mol.

Weiterhin können in der Isocyanat-reaktiven Komponente A niedermolekulare Isocyanat-reaktive Verbindungen A2) enthalten sein, vorzugsweise di- oder trifunktionelle Amine und Alkohole, bevorzugt Diole und/oder Triole mit Molmassen $M_n$ kleiner als 400 g/mol, insbesondere von 60 bis 300 g/mol. Zum Einsatz kommen z.B. Triethanolamin, Diethylenglykol, Ethylenglykol und Glycerin. Sofern zur Herstellung der Polyurethan-Hartschaumstoffe solche niedermolekularen Isocyanat-reaktiven Verbindungen Anwendung finden, z.B. in der Funktion als Kettenverlängerungsmittel und/oder Vernetzungsmittel, kommen diese zweckmäßigerweise in einer Menge von bis zu 5 Gew.-%, bezogen auf das Gesamtgewicht der Komponente A, zum Einsatz.

Als Katalysator A3) zur Herstellung der PUR-/PIR-Schaumstoffe werden Verbindungen verwendet, welche die Reaktion der reaktiven Wasserstoffatome, insbesondere Hydroxylgruppen enthaltenden Verbindungen mit der Isocyanatkomponente B beschleunigen, wie z. B. tertiäre Amine oder Metallsalze. Die Katalysatorkomponenten können dem Reaktionsgemisch zudosiert oder auch ganz oder teilweise in der Isocyanat-reaktiven Komponente A vorgelegt werden.

Verwendet werden beispielsweise tertiäre Amine, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalimetallcarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator A3) kommen ferner in Betracht: Amidine, wie z. B. 2,3-Dimethyl-3,4,5,6-tetrahydropyrimidin, Tetraalkylammoniumhydroxide, wie z. B. Tetramethylammonium-hydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Die oben genannten Katalysatoren können alleine oder in Kombination miteinander eingesetzt werden.

Gegebenenfalls können ein oder mehrere Hilfs- und Zusatzstoffe (Additive) als Komponente A4) eingesetzt werden. Beispiele für die Komponente A4) sind oberflächenaktive Substanzen, Schaumstabilisatoren, Zellregler, Flammschutzmittel, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Sepiolit, Hornblenden, Amphibole, Chrisotil, Montmorillonit und Talkum, Metalloxide, wie Kaolin, Aluminiumoxide, Titanoxide und Eisenoxide, Metallsalze, wie Kreide, Huntit, Schwerspat und anorganische Pigmente, wie Magnetit, Goethit, Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Die Hilfs- und Zusatzstoffe umfassen bevorzugt auch Flammschutzmittel wie Phosphate, z. B. Triethylphosphat (TEP), Triphenylphosphat (TPP), Trikresylphosphat, Diphenylkresyl-phosphat (DPK), tert-Butylphenyldiphenylphosphat, Resorcinyldiphenylphosphat (auch als Oligomer) und Bisphenol-A-bis(diphenylphosphat) (auch als Oligomer), und Phosphonate, z.B. Diethylethylphosphonat (DEEP), Dimethylpropylphosphonat (DMPP), Diethanolaminomethylphosphonsäurediethylester, Veriquel® R100 bzw. "E06-16" von der Fa. ICL, und auch gemischte Phosphonate wie Ethylbutylhydroxymethylphosphonat sowie Phosphinate wie 9,10-Dihydro-9-oxa-10-phosphorylphenanthrene-10-oxid (DOPO), Salze der Diphenylphosphinigen Säure und Salze der Diethylphosphinigen Säure Et2PO2H (Exolit® OP 1235, Exolit® OP 935, Exolit® OP 935, Exolit® OP L 1030) eingesetzt werden. Weitere geeignete Flammschutzmittel A5 sind beispielsweise bromierte Ester, bromierte Ether (Ixol) oder bromierte Alkohole wie Dibromneopentylakohol, Tribromneopentylalkohol, Tetrabromphthalat Diol, sowie chlorierte Phosphate wie Tris(2-chlorethyl)phosphat, Tris-(2-chlorpropyl)phosphat (TCPP), Tris(1,3-dichlorpropyl)phosphat, Tris-(2,3-dibrompropyl)phosphat, Tetrakis-(2-chlorethyl)-ethylendiphosphat, sowie handelsübliche halogenhaltige Flammschutzpolyole. Bevorzugt sind Diphenylkresylphosphat, Triethylphosphat und Bisphenol-A-bis(Diphenylphosphat). Es ist besonders bevorzugt, dass kein halogenhaltiges Flammschutzmittel eingesetzt wird.

In einer bevorzugten Ausführungsform enthält die Komponente A > 0 bis ≤ 1,5 Gew.-% Wasser (A6).

Die isocyanat-reaktive Komponente A ist bevorzugt im Wesentlichen auf die oben beschriebenen Komponenten A1) - A6) beschränkt. "Im Wesentlichen" bedeutet hierbei im Sinne dieser Anmeldung, dass weitere Komponenten, z.B. technische Verunreinigungen, andere reaktive oder nicht reaktive Verbindungen, Lösungsmittel oder ähnliches maximal in einem Gehalt von bis zu 10 Gew.-%, bevorzugt maximal bis zu 5 Gew.-%, insbesondere maximal bis zu 2 Gew.-% enthalten sind.

Die Erfindung betrifft ebenfalls ein Verfahren zur Umsetzung der erfindungsgemäßen isocyanat-reaktiven Komponente **A** mit

**B** einer Polyisocyanatkomponente
in Gegenwart von

**C** Treibmittel, enthaltend eine oder mehrere Verbindungen ausgewählt aus der Gruppe bestehend aus halogenfreien chemischen Treibmitteln, halogenfreien physikalischen Treibmitteln und (hydro)fluorierten Olefinen, zu PUR-/PIR-Hartschaumstoffen.

Als geeignete Isocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (monomeres MDI) und/oder höhere Homologe (oligomeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Mischungen aus oligomerem und gegebenenfalls monomerem MDI werden auch "polymeres MDI" genannt. Bevorzugt wird die Isocyanatkomponente **B** ausgewählt aus mindestens einer Verbindung aus der Gruppe bestehend aus polymerem MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Isocyanatkomponente **B** eingesetzt werden. Die Präpolymere sind herstellbar durch Umsetzung eines oder mehrerer Polyisocyanate mit einem oder mehreren Polyolen, entsprechend den unter den Isocyanat-reaktiven Komponenten **A** beschriebenen Polyolen.

Die Herstellung der erfindungsgemäßen PUR-/PIR-Schaumstoffe erfolgt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden.

Das Treibmittel **C** kann einer der Komponenten A oder B, insbesondere A, zudosiert werden oder bei der Vermischung zugegeben werden. Als Treibmittel wird mindestens eine Verbindung, ausgewählt aus der Gruppe bestehend aus physikalischen und chemischen Treibmittel, eingesetzt.

Physikalische Treibmittel sind beispielsweise niedrig siedende organische Verbindungen, wie z.B. Kohlenwasserstoffe, Ether, Ketone, Carbonsäureester oder Kohlensäureester. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und. Auch bevorzugt ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

Als Treibmittel **C** kann auch chemisches Treibmittel, wie beispielsweise Wasser, Carbonsäure und deren Gemische, verwendet werden. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure und Ricinolsäure, eingesetzt. Als chemisches Treibmittel wird besonders bevorzugt Wasser eingesetzt.

In einer bevorzugten Ausführungsform wird eine Mischung eines physikalischen und eines chemischen Treibmittels eingesetzt.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$Kennzahl = (Mole\ Isocyanat\text{-}Gruppen\ /\ Mole\ Isocyanat\text{-}reaktive\ Gruppen)*100$$

In dem erfindungsgemäßen Verfahren wird bevorzugt eine Kennzahl in einem Bereich von ≥ 180 eingesetzt. Die PIR-Strukturen führen zu einer höheren Flammwidrigkeit des Schaums selbst. In einer besonders bevorzugten Ausführungsform liegt die Kennzahl des Reaktionsgemischs bei 240-440.

Die Erfindung betrifft ebenfalls einen PUR-/PIR-Hartschaumstoff der durch das erfindungsgemäße Verfahren hergestellt ist. Die erfindungsgemäßen PUR-/PIR-Schaumstoffe finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Ein weiterer Gegenstand der Erfindung ist demzufolge die Verwendung eines erfindungsgemäßen PUR-/PIR-Schaumstoffes als Isolationsschaumstoff und/oder als Haftvermittler in Verbundelementen, wobei die Verbundelemente eine einen erfindungsgemäßen PUR-/PIR-Schaumstoff umfassende Schicht und mindestens eine Deckschicht umfassen. Die Deckschicht wird hierbei zumindest teilweise von einer den erfindungsgemäßen PUR-/PIR-Schaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln. Insbesondere handelt es sich bei mindestens einer Deckschicht um eine Deckschicht aus Metall (Metallverbundelement).

Die zahlengemittelte Molmasse $M_n$ (auch: das gewichtsmittlere Molekulargewicht) wird im Rahmen dieser Erfindung bestimmt durch Gelpermeationschromatographie nach DIN 55672-1 vom August 2007.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-1 (Juni 2013).

"Funktionalität" bezeichnet im Rahmen der vorliegenden Erfindung die theoretische, aus den bekannten Einsatzstoffen und deren Mengenverhältnissen berechnete zahlenmittlere Funktionalität (Anzahl an gegenüber Isocyanaten bzw. gegenüber Polyolen reaktiven Funktionen im Molekül).

Der NCO-Wert (auch: NCO-Gehalt, Isocyanatgehalt) wird bestimmt mittels EN ISO 11909 (Mai 2007).

**Beispiele**

Die OH-Zahl (Hydroxylzahl) wurde gemäß DIN 53240-1 (Juni 2013) bestimmt. Die Bestimmung der Säurezahl wurde gemäß DIN EN ISO 2114 (November 2006) durchgeführt. Der NCO-Wert (auch: NCO-Gehalt, Isocyanatgehalt) wird bestimmt mittels EN ISO 11909 (Mai 2007).

**Herstellung der Metallverbundelemente:**

Die Herstellung von PUR-/PIR-Verbundelementen auf Basis der in den Tabellen beschriebenen Formulierungen erfolgt nach dem Fachmann bekannten Einstufenverfahren, bei dem die Reaktionskomponenten kontinuierlich miteinander zur Reaktion gebracht werden und dann anschließend durch Zuhilfenahme maschineller Einrichtungen nach Austrag auf ein Transportband bei 60°C zur Aushärtung gebracht werden. Als Deckschichten wurden Stahlcoils in der Dicke 0,45 mm oben und unten von der Fa. ArcelorMittal Construction verwendet. Im Anschluss wurden die 2m Elemente in einem Kühligel für 24h gelagert. Die Rezepturen und Ergebnisse der physikalischen Messungen an den erhaltenen Proben sind in den Tabellen wiedergegeben.

**Messertest:**

Um die Anfälligkeit bei der Bearbeitung von Metallverbundelementen hinsichtlich Rissbildung in der Kälte zu bewerten, wurde ein sogenannter Messertest durchgeführt. Die Metallverbundelemente wurden in einer Kühlkammer für 24 h bei entweder 0, -10 bzw. -20°C gelagert und direkt im Anschluss mit einem Messer im Zentrum der Schaumschicht an mehreren Positionen (zentrumsnah und in der Nähe der Fuge bzw. Nase) eingestochen. Paneele, die bei Raumtemperatur getestet wurden, wurden direkt nach Abstapelung vom Kühligel eingesetzt. Paneele, bei denen sich bei leichtem Drehen der Messerklinge oder sogar schon bei Einstechen der Klinge selbst Risse parallel zur Produktionsrichtung ausbildeten, galten als durchgefallen. Lautes Knacken während des Einstechens gilt als Anzeichen einer vorhandenen Spannung und gilt auch als Durchfallkriterium. Wurden keine Knackgeräusche vermerkt und bildeten sich keine Längsrisse aus, so wurde der Test als bestanden erklärt.

**Verwendete Rohstoffe:**

| | |
|---|---|
| Polyol P1-a | Aromatisches Polyesterpolyol (a1) hergestellt durch Umsetzung von Phtalsäureanhydrid, Adipinsäure, Ethylenglykol und Diethylenglykol mit einer OH-Zahl von 240 mg KOH/g der Fa. Covestro Deutschland AG |
| Polyol P 1-b | Aromatisches Polyesterpolyol (a1) auf Basis von rezykliertem Polyethylenterephtalat mit einer OH-Zahl von 230-240 mg KOH/g der Fa. Synthesia Technology |
| Polyol P 2-a | Aromatisches Polyesterpolyol (a2) hergestellt durch Umsetzung von Trimethylolpropan, Phtalsäureanhydrid, Sojaölfettsäure und Adipinsäure mit einer OH-Zahl von 370 mg KOH/g der Fa. Covestro Deutschland AG |
| Polyol P4-a | Polyetherpolyol (a4) auf Basis von ortho-Toluoldiamin, Ethylenoxid und Propylenoxid mit einer OH-Zahl von 415 mg KOH/g und Funktionalität von 4 der Fa. Covestro Deutschland AG |
| Polyol P4-b | Polyetherpolyol auf Basis von Sucrose, Propylenglykol und Proyplenoxid mit einer OH-Zahl von 450 mg KOH/g und einer Funktionalität von 4,6 der Fa. Covestro Deutschland AG |
| Polyol P5-a | Polyesterpolyol (a5) aus Phthalsäureanhydrid und Diethylenglykol mit einer OH-Zahl von 795 mg KOH/g der Fa. Covestro Deutschland AG |
| Polyol P3-a | Polyetherpolyol (a3) auf Basis von Propylenglykol, Ethylenoxid und Propylenoxid im Verhältnis (29,8 %/70,2 %) mit einer OH-Zahl von 28 mg KOH/g und einer Funktionalität von 2 der Fa. Covestro Deutschland AG |
| Polyol P3-b | Polyetherpolyol auf Basis von Glycerin, Propylenoxid und Ethylenoxid im Verhältnis (72,7 %/27,3 %) mit einer OH-Zahl von 37 mg KOH/g und Funktionalität von 3 der Fa. Covestro Deutschland AG |
| Polyol P3-c | Polyetherpolyol auf Basis von Propylenglykol, Ethylenoxid und Propylenoxid im Verhältnis (13,3 %/86,7 %) mit einer OH-Zahl von 28 mg KOH/g und Funktionalität von 2 der Fa. Covestro Deutschland AG |
| Polyol P3-d | Polyetherpolyol auf Basis von Glycerin, Monopropylenglykol, Ethylenoxid und Propylenoxid im Verhältnis (1 %/99 %) mit einer OH-Zahl von 44,5 mg KOH/g und Funktionalität von 2,98 der Fa. Covestro Deutschland AG |
| Rizinusöl | Rizinusöl |
| TCPP | Tris(1-chloro-2-propyl)-phosphat der Fa. Lanxess GmbH |
| TEP | Triethylphosphat der Fa. Lanxess GmbH |
| TP | Triphenylphosphat der Fa. Lanxess GmbH |
| Veriquel R100 | Halogenfreies, phosphor-haltiges Flammschutzmittel mit einer OH-Zahl von 270 mg KOH/g der Fa. ICL Industrial Products |
| Stabilisator B8443 | Polyetherpolysiloxancopolymerisat der Fa. Evonik |
| Desmodur® 44V70L | polymeres Polyisocyanat auf Basis 4,4-Diphenylmethandiisocyanat mit einem NCO-Gehalt |

von ca. 31,5 Gew.-% Fa. Covestro Deutschland AG

Zusatzmittel CA      Kohlendioxid-freisetzendes Additiv auf Basis von Monoisopropanolamin der Fa. Covestro Deutschland AG

Desmorapid® DB      Benzyldimethylamin der Fa. Covestro Deutschland AG, Leverkusen, Deutschland

Desmorapid® 1792      Kaliumacetat (Kaliumethanoat nach IUPAC), 25 wt-% in Diethylenglykol

Desmorapid® 30HB14      Kaliumformiat (Kaliummethanoat nach IUPAC) 36 wt-% in Monoethylenglykol

**Zusammensetzung der Polyolformulierungen und Ergebnisse der Messertests:**

**Tabelle 1: Messertest an unterschiedlich lange gealterten Paneelen mit einer Elementdicke von 100 mm.**

| Komponenten | | Beispiel 1* | Beispiel 2* | Beispiel 3* | Beispiel 4* |
|---|---|---|---|---|---|
| Polyol P1-a | [Tle] | 66,5 | 66,5 | 66,5 | 66,5 |
| Polyol P4-a | [Tle] | 5,2 | 5,2 | 5,2 | 5,2 |
| TCPP | [Tle] | 20,8 | 20,8 | 20,8 | 20,8 |
| TEP | [Tle] | 5,2 | 5,2 | 5,2 | 5,2 |
| Polyol P5-a | [Tle] | 2,3 | 2,3 | 2,3 | 2,3 |
| B8443 | [Tle] | 2,5 | 2,5 | 2,5 | 2,5 |
| Zusatzmittel CA | [Tle] | 1,5 | | | |
| Desmorapid DB | [Tle] | | 1,5 | 1,0 | 2,5 |
| Desmorapid 1792 | [Tle] | 4,1 | 4,6 | | |
| Desmorapid 30HB14 | [Tle] | | | 2,9 | 2,2 |
| 44V70L | [Tle] | 228,0 | 197,0 | 195,0 | 190,0 |
| n-Pentan | [Tle] | 17,0 | 16,0 | 15,4 | 15,0 |
| Index (100 NCO/OH) | | 344,0 | 344,0 | 345,0 | 348,0 |
| Risse @ -20°C, 48h | | ja | ja | ja | ja |
| Risse @ -20°C, 4w | | ja | ja | ja | ja |
| Risse @ -20°C, 8w | | nein | nein | nein | nein |

**Tabelle 1** fasst die Ergebnisse zu den Messertestversuchen bei -20°C von Metallpaneelen mit einer Elementdicke von 100 mm zusammen, die mit einer nicht erfindungsgemäßen Rezeptur (ohne Komponente a3) mit verschiedenen Katalysatorpaketen bzw. Katalysatorverhältnissen hergestellt worden sind.

Paneele auf Basis einer nicht erfindungsgemäßen Polyolformulierung reißen im Schaum, wenn diese bei einer Temperatur von -20°C (@ -20°C) 48h nach Produktionsdatum dem Messertest unterzogen werden. Auch Paneele, die bei Raumtemperatur vier Wochen (4w) lang gelagert und anschließend bei -20°C mit dem Messer angestochen wurden, zeigten das gleiche Schadensbild. Dahingegen konnte keine Rissbildung festgestellt werden, wenn die Paneele für weitere vier Wochen (insgesamt acht Wochen (8w)) gelagert wurden, bevor der Messertest durchgeführt worden ist.

**Tabelle 2 Messertestversuche mit 100mm-Paneelen.**

| Komponente | Einheit | Beispiel 5* | Beispiel 6 | Beispiel 7* | Beispiel 8* | Beispiel 9* |
|---|---|---|---|---|---|---|
| Polyol P1-a | [Tle] | 66,5 | 56,5 | 56,5 | 56,5 | 56,5 |
| Polyol P1-b | [Tle] | | | | | |
| Polyol P4-a | [Tle] | 5,2 | 5,2 | 5,2 | 5,2 | 5,2 |

(fortgesetzt)

| Komponente | Einheit | Beispiel 5* | Beispiel 6 | Beispiel 7* | Beispiel 8* | Beispiel 9* |
|---|---|---|---|---|---|---|
| Polyol P3-a | [Tle] | | 10,0 | | | |
| Polyol P3-b | [Tle] | | | 10,0 | | |
| Polyol P3-c | | | | | 10 | |
| Polyol P3-d | | | | | | 10,0 |
| TCPP | [Tle] | 20,8 | 20,8 | 20,8 | 20,8 | 20,8 |
| TEP | [Tle] | 5,2 | 5,2 | 5,2 | 5,2 | 5,2 |
| Polyol P5-a | [Tle] | 2,3 | 2,3 | 2,3 | 2,3 | 2,3 |
| B8443 | [Tle] | 3,0 | 3,0 | 3,0 | 3 | 3,0 |
| Desmorapid DB | [Tle] | 1,5 | 0,8 | 0,5 | 1,2 | 1,5 |
| Desmorapid 1792 | [Tle] | 4,1 | 3,2 | 3,0 | 3,3 | 3,6 |
| 44V70L | [Tle] | 185,0 | 165,0 | 165,0 | 167,4 | 170,4 |
| n-Pentan | [Tle] | 15,5 | 15,5 | 15,2 | 15,2 | 15,4 |
| Index (100 NCO/OH) | | 322,4 | 326,6 | 327,7 | 330 | 330 |
| Risse/Knacken @ -20°C* | | ja/ja | nein/nein | nein/ja | ja/ja | ja/ja |
| Risse/Knacken @ -10°C* | | nein/ja | nein/nein | nein/nein | nein/nein | ja/ja |
| Oberflächenbild Oberseite | | + | + | + | + | - |
| Oberflächenbild Unterseite | | + | + | + | + | - |
| **\* Messertests wurden 3 Wochen nach Herstellung der Elemente durchgeführt.** | | | | | | |

**Tabelle 3 Untersuchung der Oberflächenstörungen bei 100 mm Paneelen.**

| Komponente | | | Beispiel 10 | Beispiel 11* |
|---|---|---|---|---|
| Polyol P1-a | [Tle] | | 56,5 | 56,5 |
| Polyol P4-a | [Tle] | | 5,2 | 5,2 |
| Polyol P3-a | [Tle] | | 10,0 | |
| Polyol P3-b | [Tle] | | | 10,0 |
| TCPP | [Tle] | | 20,8 | 20,8 |
| TEP | [Tle] | | 5,2 | 5,2 |
| Polyol P5-a | [Tle] | | 2,3 | 2,3 |
| B8443 | [Tle] | | 2,0 | 2,0 |
| Desmorapid DB | [Tle] | | 0,8 | 0,5 |
| Desmorapid 1792 | [Tle] | | 3,2 | 3,0 |
| 44V70L | [Tle] | | 165,0 | 165,0 |
| n-Pentan | [Tle] | | 15,5 | 15,2 |
| Index (100 NCO/OH) | | | 326,6 | 327,7 |
| Oberflächenbild Oberseite | | | + | + |
| Oberflächenbild Unterseite | | | + | - |

Die Ergebnisse in Tabelle 2 zeigen, dass bei Paneelen mit einer Elementdicke von 100 mm, die mit einer erfindungsgemäßen Polyolformulierung produziert und innerhalb der ersten drei Wochen nach Produktion dem Messertest bei -20°C unterworfen wurden, bei dieser Temperatur keine Risse entstehen und bei Einstechen des Messer auch keine Knackgeräusche entstehen, die auf vorhandene Spannungen im Paneel hindeuten. Desweiteren verfügen die Elemente, die Polyole a3 mit einem erfindungsgemäßen EO/PO-Verhältnis enthalten, über bessere Oberflächenqualitäten als jene mit Komponenten a3 abweichender Zusammensetzung (siehe Tabelle 2 und Tabelle 3). Des Weiteren wird aus Tabelle 4 ersichtlich, dass bei Paneelen auf Basis von nicht-erfindungsgemäßen Formulierungen mit ≤5 Gewichtsteilen eines Polyols a3 in der Polyolformulierung bei -20°C Rissbildungen im Messertest zu beobachten sind.

**Tabelle 4 Messertestversuche mit 100mm-Paneelen bei unterschiedlichen Anteilen an Polyol a3.**

| Komponenten | | Beispiel 12* | Beispiel 13* | Beispiel 14* | Beispiel 15 | Beispiel 16 | Beispiel 17 |
|---|---|---|---|---|---|---|---|
| Polyol P1-b | [Tle] | 89,2 | 89,5 | 68,8 | 74,00 | 77,00 | 67,00 |
| Polyol P1-a | [Tle] | | | | | | 10,00 |
| Polyol P2-a | [Tle] | | | | | 2,00 | 2,00 |
| Polyol P4-b | [Tle] | | | 10,0 | | | |
| Polyol P4-a | [Tle] | | | 5,2 | | | |
| Polyol P3-a | [Tle] | 0,0 | 0,0 | 5,0 | 10,00 | 10,00 | 10,00 |
| Rizinusöl | [Tle] | | | | 5,00 | | |
| TEP | [Tle] | 10,0 | 10,0 | 10,0 | 10,00 | 10,00 | 10,00 |
| Polyol P5-a | [Tle] | | | 0,5 | 0,5 | 0,5 | 0,5 |
| Wasser | [Tle] | 0,8 | 0,5 | 0,5 | 0,5 | 0,5 | 0,5 |
| B8443 | [Tle] | 3,0 | 3,0 | 3,0 | 2,5 | 2,5 | 2,5 |
| Desmorapid DB | [Tle] | 1,0 | 1,0 | 1,2 | 1,4 | 1,4 | 1,4 |
| Desmorapid 1792 | [Tle] | 3,8 | 3,5 | 3,4 | 2,9 | 2,7 | 2,7 |
| 44V70L | [Tle] | 226,0 | 210,0 | 240,0 | 201 | 205 | 205 |
| n-Pentan | [Tle] | 14,2 | 14,5 | 16,7 | 14,4 | 15 | 14,6 |
| Index (100 NCO/OH) | | 319,0 | 320,0 | 331,0 | 334 | 335 | 335 |
| Risse/Knacken @ -20°C* | | ja/ja | ja/ja | ja/ja | nein/nein | nein/nein | nein/nein |
| *Messertests wurden 3 Wochen nach Herstellung der Elemente durchgeführt. | | | | | | | |

**Patentansprüche**

1. Isocyanat-reaktive Komponente **A**), welche folgende Komponenten enthält:

   **A1**) eine Polyolformulierung, umfassend

   50-80 Gew.-% einer Polyolkomponente **a1**) bestehend aus einem oder mehreren Polyolen ausgewählt aus Polyesterpolyolen, Polycarbonatpolyolen oder Polyetheresterpolyolen mit einer Hydroxylzahl von 100 bis 300 mg KOH/g und einer mittleren Funktionalität von 1,5 bis 2,5, wobei die Polyolkomponente a1) mindestens ein aromatisches oder aromatisch/aliphatisches Polyesterpolyol oder Polyetheresterpolyol umfasst,
   0 - 5 Gew.-% einer Polyolkomponente **a2**) bestehend aus einem oder mehreren Polyolen ausgewählt aus Polyesterpolyolen und Polyetheresterpolyolen mit einer Hydroxylzahl von 320 bis 450 mg KOH/g und einer mittleren Funktionalität von 3 bis 4,5, wobei die Polyolkomponente a2) mindestens ein aromatisches oder ein aromatisch/aliphatisches Polyesterpolyol oder Polyetheresterpolyol umfasst,
   7,0 - 15 Gew.-% einer Polyolkomponente **a3**) bestehend aus einem oder mehreren Polyolen ausgewählt aus Polyetherpolyolen mit einer OH-Zahl von 10 bis 80 KOH/g und einer mittleren Funktionalität von $\geq 2,0$ bis $\leq 3,0$, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO,

0,0 - 7,5 Gew.-% einer Polyolkomponente **a4**) bestehend aus einem oder mehreren Polyolen ausgewählt aus Polyetherpolyolen mit einer OH-Zahl im Bereich von 350 - 500 mg KOH/g, hergestellt durch Alkoxylierung eines aromatischen Amins mit mindestens einem Alkylenoxid,

0,0 - 3,0 Gew.-% einer Polyolkomponente **a5**) bestehend aus einem oder mehreren Polyolen ausgewählt aus Polyesterpolyolen mit einer OH-Zahl im Bereich von 600 - 900 mg KOH/g, insbesondere von 750 - 850 mg KOH/g;

**A2**) 0 - 5 Gew.-% niedermolekulare isocyanat - reaktive Verbindungen, sowie

**A3**) gegebenenfalls Katalysatoren,

**A4**) gegebenenfalls Hilfs- und Zusatzstoffe,

**A5**) 0 - 1,5 Gew.-% Wasser und

**A6**) 0 - 7,5 Gew.-% (insbesondere bevorzugt 0 - 5 Gew.-%) Rizinusöl,

wobei alle Gewichtsprozent-Angaben jeweils bezogen auf das Gesamtgewicht von A sind.

2. Isocyanat-reaktive Komponente A) gemäß Anspruch 1, wobei mehr als 50 Gew.-% der Komponente a1), insbesondere mehr als 80 Gew.-%, aromatische und/oder aromatisch/aliphatische Polyesterpolyole und/oder Polyetheresterpolyole sind.

3. Isocyanat-reaktive Komponente A) gemäß Anspruch 1 oder 2, wobei zur Alkoxylierung der Polyetherpolyole in der Komponente a3) eine Mischung aus Ethylenoxid und Propylenoxid mit einem Ethylenoxid-Gehalt 15-50 Gew.-% eingesetzt wird.

4. Isocyanat-reaktive Komponente A) gemäß Anspruch 1, 2 oder 3, wobei A) 8,0 - 12 Gew.-% der Polyolkomponente a3) enthält.

5. Isocyanat-reaktive Komponente A) gemäß einem der vorangehenden Ansprüche, wobei die Polyetherpolyole der Komponente a4) auf Toluylendiamin, Diaminodiphenylmethan und/oder Polymethylen-polyphenylen-polyamin gestartet sind.

6. Isocyanat-reaktive Komponente gemäß einem der vorangehenden Ansprüche, wobei als Polyolkomponente a5) ein Polyesterpolyol eingesetzt wird, welches aus Phthalsäureanhydrid und Diethylenglykol erhältlich ist.

7. Isocyanat-reaktive Komponente gemäß einem der vorangehenden Ansprüche enthaltend > 0 bis $\leq$ 1,5 Gew.-% Wasser (A6).

8. Verfahren zur Umsetzung eines Reaktionsgemisches aus einer isocyanat-reaktiven Komponente **A** gemäß einem der Ansprüche 1 - 6 mit

**B** einer Polyisocyanatkomponente in Gegenwart von

**C** Treibmittel, enthaltend eine oder mehrere Verbindungen ausgewählt aus der Gruppe bestehend aus halogenfreien chemischen Treibmitteln, halogenfreien physikalischen Treibmitteln und (hydro)fluorierten Olefinen.

9. Verfahren gemäß Anspruch 7, wobei das Reaktionsgemisch einen Isocyanat-Index von $\geq$ 180 aufweist.

10. Herstellung von PUR-/PIR-Hartschaumstoffen umfassend ein Verfahren gemäß einem der Ansprüche 7 oder 8.

11. PUR-/PIR-Hartschaumstoff erhältlich durch ein Verfahren gemäß Anspruch 9.

12. Verwendung eines PUR-/PIR-Hartschaumstoffes gemäß Anspruch 11 als Isolationsschaumstoff und/oder als Haftvermittler in Verbundelementen, wobei die Verbundelemente eine den PUR-/PIR-Hartschaumstoff umfassende Schicht und mindestens eine Deckschicht umfassen.

13. Verbundelemente, welche einen Kern aus einem PUR-/PIR-Hartschaumstoff gemäß Anspruch 11 und eine oder zwei Deckschichten enthalten.

14. Verbundelemente gemäß Anspruch 13, wobei mindestens eine der zwei Deckschichten aus Metall ist.

**Europäisches Patentamt**
**European Patent Office**
**Office européen des brevets**

# EUROPÄISCHER RECHERCHENBERICHT

Nummer der Anmeldung

EP 20 19 1871

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2013/010988 A1 (BAYER IP GMBH [DE]; ALBERS REINHARD [DE] ET AL.) 24. Januar 2013 (2013-01-24) * Anspruch 1; Beispiele 1, 2; Tabelle 1 * * Seite 14 * ----- | 1-3,5,6, 8-11 | INV. C08G18/42 C08G18/48 C08G18/50 C08G18/40 C08G18/76 |
| A,D | WO 2018/206624 A1 (BASF SE [DE]) 15. November 2018 (2018-11-15) * Beispiele 1-3; Tabelle 1 * ----- | 1-14 | C08G18/36 B32B15/04 |
| A | EP 3 553 106 A1 (COVESTRO DEUTSCHLAND AG [DE]) 16. Oktober 2019 (2019-10-16) * Absatz [0049] * * Absatz [0086] * * Beispiele 7, 8; Tabellen 1, 2 * ----- | 1-14 | |

RECHERCHIERTE SACHGEBIETE (IPC)

C08G
B32B

Der vorliegende Recherchenbericht wurde für alle Patentansprüche erstellt

| Recherchenort | Abschlußdatum der Recherche | Prüfer |
|---|---|---|
| München | 27. Januar 2021 | Sütterlin, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 1871

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-2021

| Im Recherchenbericht angeführtes Patentdokument | Datum der Veröffentlichung | Mitglied(er) der Patentfamilie | Datum der Veröffentlichung |
|---|---|---|---|
| WO 2013010988 A1 | 24-01-2013 | CN 103649148 A | 19-03-2014 |
| | | DE 102011079336 A1 | 24-01-2013 |
| | | DK 2734564 T3 | 30-11-2020 |
| | | EP 2734564 A1 | 28-05-2014 |
| | | RU 2014105649 A | 27-08-2015 |
| | | US 2014162006 A1 | 12-06-2014 |
| | | WO 2013010988 A1 | 24-01-2013 |
| WO 2018206624 A1 | 15-11-2018 | AU 2018264974 A1 | 21-11-2019 |
| | | BR 112019023495 A2 | 19-05-2020 |
| | | CA 3062380 A1 | 15-11-2018 |
| | | CN 110621714 A | 27-12-2019 |
| | | JP 2020519726 A | 02-07-2020 |
| | | KR 20190142414 A | 26-12-2019 |
| | | PH 12019502516 A1 | 20-07-2020 |
| | | TW 201902970 A | 16-01-2019 |
| | | WO 2018206624 A1 | 15-11-2018 |
| EP 3553106 A1 | 16-10-2019 | CN 112020526 A | 01-12-2020 |
| | | EP 3553106 A1 | 16-10-2019 |
| | | EP 3774969 A1 | 17-02-2021 |
| | | WO 2019197364 A1 | 17-10-2019 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018206624 A